Europäisches Patentamt

European Patent Office

Office européen des brevets

(11) Veröffentlichungsnummer: **0 508 336 A1**

## (12) EUROPÄISCHE PATENTANMELDUNG

(21) Anmeldenummer: **92105862.4**

(22) Anmeldetag: **04.04.92**

(51) Int. Cl.5: **H01G 13/00**, H01G 4/38, H01G 9/08

(30) Priorität: **09.04.91 DE 4111401**

(43) Veröffentlichungstag der Anmeldung:
**14.10.92 Patentblatt 92/42**

(84) Benannte Vertragsstaaten:
**AT CH DE FR GB LI**

(71) Anmelder: **ABB PATENT GmbH**
**Kallstadter Strasse 1**
**W-6800 Mannheim 31(DE)**

(72) Erfinder: **Lüttich, Rolf**
**Gartenstrasse 3**
**W-6936 Schwanheim(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Kondensatoranordnung.**

(57) Mit der Erfindung wird eine Anordnung (1) mehrerer parallelgeschalteter Chipkondensatoren (6) vorgestellt, die in lötfreier Technik mit Stromschienen (2,3) über federnde Kontaktmatten (4,5) kontaktiert sind. Mit Hilfe einer Spannvorrichtung (10,11) kann ein definierter Anpreßdruck (P) zur Kontaktierung eingestellt und aufrechterhalten werden. Die Kondensatoranordnung (1) ist z.B. als Ausgangsfilter eines Schaltnetzteils einsetzbar.

Fig.1

EP 0 508 336 A1

Die Erfindung bezieht sich auf eine Kondensatoranordnung, die aus einer Parallelschaltung mehrerer Kondensatoren besteht.

Die Kondensatoranordnung läßt sich beispielsweise vorteilhaft als Ausgangsfilter eines Schaltnetzteils einsetzen. Es ist an sich bekannt, die in einer solchen Kondensatoranwendung benötigte Kapazität auf mehrere Kondensatoren aufzuteilen. In "Siemens Forschungs- und Entwicklungsberichte" Band 17, 1988, Nr. 5, Seite 245 bis 248 ist auf Seite 246 eine solche Anordnung von Filterkondensatoren beschrieben und in Figur 6 dargestellt. Für solche Anordnungen werden z.B. Becherkondensatoren mit auf der Oberseite vorhandenen Schraub- oder Lötanschlüssen verwendet. Auch Anordnungen mit Kondensatoren, die Anschlußdrähte aufweisen, sind bekannt. Außerdem sind aus der SMD-Technik auflötbare Chipkondensatoren bekannt. Eine Aufteilung der erforderlichen Filterkapazität auf mehrere Kondensatoren wird beim Stand der Technik im Hinblick auf die vorgegebene Bauform des Schaltnetzteils vorgenommen.

Bei Schaltnetzteilen gibt es einen Entwicklungstrend zu hohen Schaltfrequenzen, womit eine deutliche Verkleinerung der Bauteile, insbesondere von Transformatoren erforderlich ist. Je höher die Schaltfrequenz ist, desto kleiner ist die erforderliche Filterkapazität. Die relativ geringe Kapazität kann dann mit einem oder wenigen Kondensatoren realisiert werden.

Die bei Schaltnetzteilen mit hoher Schaltfrequenz an ein Ausgangsfilter zu stellenden typischen Anforderungen sind: Kapazität im Bereich von 1000 $\mu$F bis 10 mF, Spannungsfestigkeit mindestens 7,5 V und Strombelastbarkeit mindestens 30 Ampere. Die Ersatz-Serieninduktivität (ESL) sollte unter 1 nH und der Ersatz-Serienwiderstand (ESR) unter 0,25 Milliohm liegen.

Die besten handelsüblichen Kondensatoren im angegebenen Kapazitätsbereich weisen ESR- bzw. ESL-Werte auf, die um einen Faktor 10 über den jeweils zulässigen Werten liegen. Durch Parallelschaltung einer Vielzahl von Kondensatoren kleiner Kapazität lassen sich jedoch die Anforderungen an die ESR- bzw. ESL-Werte erfüllen.

Die Montage einer Vielzahl von Kondensatoren und die Herstellung der elektrischen Anschlüsse ist allerdings bei den Bauweisen bekannter Anordnungen aufwendig und kaum automatisierbar.

Dies gilt insbesondere auch für eine aus der Druckschrift FR 25 20 921 bekannte Kondensatoranordnung, bei der mehrere speziell geformte Einzelkondensatoren mit Hilfe einer Vielzahl von Schraubverbindungen in einer Anordnung zwischen parallelen Stromschienen mechanisch befestigt und elektrisch kontaktiert sind.

Der Erfindung liegt daher die Aufgabe zugrunde, eine verbesserte Anordnung einer Anzahl von elektrisch parallel geschalteten Kondensatoren anzugeben.

Diese Aufgabe wird gelöst durch eine Kondensatoranordnung, insbesondere zur Verwendung als Ausgangsfilter eines Schaltnetzteils, die aus einer Parallelschaltung mehrerer Kondensatoren besteht, wobei

- Kondensatoren eingesetzt sind, die elektrische Kontaktflächen auf zwei sich gegenüberliegenden Hauptflächen aufweisen,
- die Kondensatoren nebeneinander zwischen zwei plattenförmigen Stromschienen angeordnet sind, wobei die Kontaktflächen parallel zu den Stromschienen angeordnet sind,
- Mittel vorhanden sind, die die übereinander geschichtete Anordnung von erster Stromschiene, Chipkondensatoren, und zweiter Stromschiene mit einer Anpreßkraft beaufschlagen, die zur sicheren Kontaktgabe erforderlich ist,
- als Kondensatoren Chipkondensatoren eingesetzt sind, und
- zwischen den Kontaktflächen der Chipkondensatoren und den Stromschienen jeweils eine Kontaktmatte angeordnet ist, die einen elektrischen Kontakt zwischen den Kontaktflächen der Chipkondensatoren und den Stromschienen herstellen.

Vorteilhafte Ausgestaltungen sind in Unteransprüchen angegeben.

Mit der Erfindung wird eine Kondensatoranordnung mit lötfreier Montagetechnik vorgeschlagen, wobei in vorteilhafter Weise eine thermische Belastung der Bauelemente vermieden und damit eine erhöhte Zuverlässigkeit der Gesamtanordnung erzielt wird. Die Kondensatoranordnung kann von Handhabeautomaten zusammengesetzt werden.

Mittel zur Druckbeaufschlagung können Spannvorrichtungen, wie z.B. Schrauben oder Nieten sein, die durch die Stromschienen und zwischengefügte Zwischenstücke greifen, wobei die Zwischenstücke als Abstandsstücke ausgebildet sein können, mit deren Hilfe ein definierter Anpreßdruck P einstellbar ist.

Zur Positionierung der Chipkondensatoren bzw. zur Positionierung von Federkontakten der Kontaktmatten gegenüber Kontaktflächen der Chipkondensatoren können gitterförmige Zwischenstücke dienen, die außerdem als Abstandshalter wirken können.

Gemäß einer vorteilhaften Ausgestaltung kann die gesamte Kondensatoranordnung als Steckkontakt in einem Steckverbinder ausgebildet sein.

Eine ausführlichere Beschreibung der Erfindung erfolgt nachstehend anhand von in der Zeichnung dargestellten Ausführungsbeispielen.

Es zeigt:

Figur 1    schematische Darstellung der Kondensatoranordnung,

Figur 2 Detaildarstellung einer Anordnung eines Positioniergitters und eines Abstandhalters,

Figur 3 Steckverbinderanordnung,

Figur 4 Detaildarstellung der Kontaktmatte mit Federkontakten zur Kontaktierung von Chipkondensatoren.

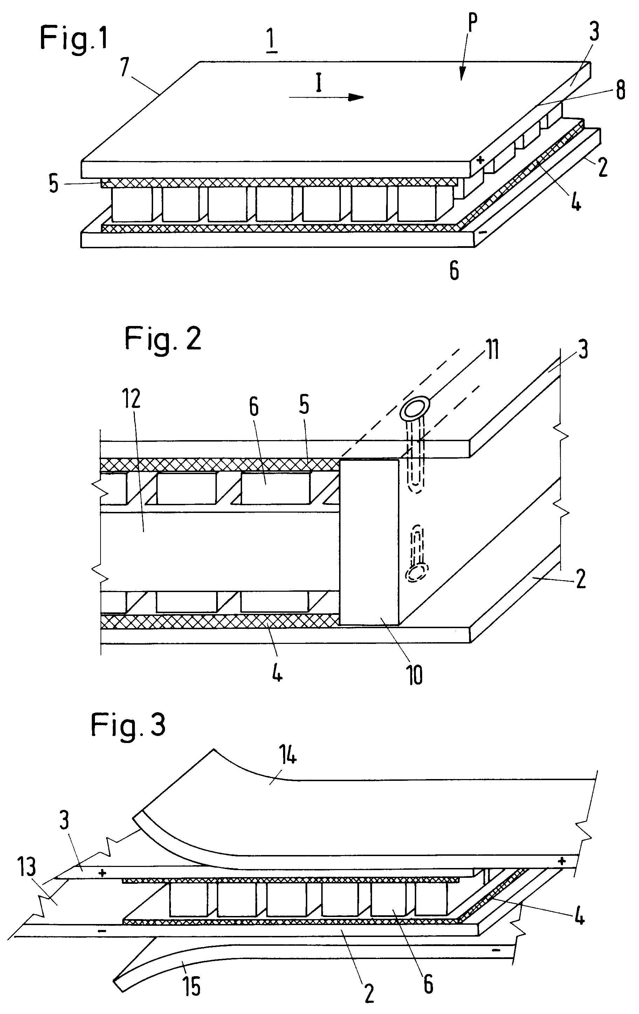

Figur 1 zeigt in schematischer Darstellung eine Kondensatoranordnung 1, die aus einer Übereinanderschichtung einer ersten Stromschiene 2, einer ersten Kontaktmatte 4, einer Anzahl von nebeneinander angeordneten Chipkondensatoren 6, einer zweiten Kontaktmatte 5 und einer zweiten Stromschiene 3 besteht. Die erste Stromschiene 2 kann z.B. die Minus-Stromschiene sein und die zweite Stromschiene 3 die Plus-Stromschiene. An einer Stromeintrittsstelle 7 kann beispielsweise bei Verwendung der Kondensatoranordnung 1 als Ausgangsfilter eines Schaltnetzteils ein Strom I in die Plus-Stromschiene 3 eintreten, um zu einem Verbraucher geleitet zu werden, um von dort zurück zur Minus-Stromschiene 2 zu fließen. Die Kondensatoranordnung 1 wirkt bei einer solchen Betriebsweise als Vierpolkondensator.

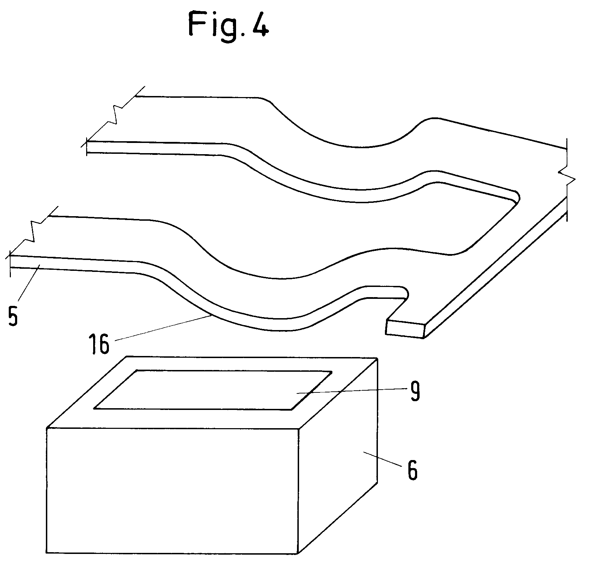

Die Stromschienen 2, 3 können z.B. Kupferplatten sein. Die Chipkondensatoren 6 können z.B. Tantalkondensatoren oder Keramikkondensatoren sein, die unten und oben Kontaktflächen 9 (siehe Figur 4) für einen Pluspol- bzw. Minuspol-Anschluß aufweisen. Die Kontaktmatten 4, 5 können unterschiedlich ausgeführt sein, sie müssen jedoch eine Federwirkung aufweisen, um einen sicheren Kontakt zwischen den Stromschienen 2, 3 und der Kontaktfläche 9 der Chipkondensatoren 6 zu gewährleisten, wobei auch Toleranzen in den Abmessungen der Chipkondensatoren 6 ausgeglichen werden müssen. Die Kontaktmatten 4, 5 können z.B. ein federndes Kupfergeflecht sein oder aus einem gestanztem Blech bestehen, dessen Stege durch Verdrehen oder durch gepreßte Wölbungen eine Federwirkung erhalten. Als Material ist dafür eine Beryllium-Bronze-Legierung geeignet, wobei ein daraus hergestelltes, gestanztes und geprägtes Blech vorteilhaft versilbert wird.

Die Kondesatoranordnung 1 wird durch eine angepaßte Anpreßkraft P zusammengehalten und kontaktiert. Die erfindungsgemäße Druckkontaktierung der Kondensatoranordnung 1 ist wesentlich günstiger als eine Lötkontaktierung. Die Stromschienen sind nämlich in der Praxis bezüglich ihrer Dicke bzw. ihres Querschnittes an den Strom I angepaßt und daher relativ dick ausgeführt. Würde man eine solche Anordnung z.B. unter Zwischenfügung von Lotblättchen im Reflow-Verfahren verlöten, so wären lange Lotzeiten erforderlich. Für derart lange dauernde Temperatureinwirkungen sind die Chipkondensatoren nicht ausgelegt.

In Figur 2 ist in einem Ausführungsbeispiel gezeigt, wie die erforderliche Anpreßkraft P eingestellt werden kann. Zwischen den Stromschienen 2, 3 sind Abstandsstücke 10 angeordnet, die mit Schrauben 11 mit den Stromschienen 2, 3 verschraubt sind. Anstelle mehrerer Abstandsstücke 10 kann z.B. auch ein einziges rahmen- oder gitterförmiges Abstandsstück 10 vorgesehen werden. Das elektrisch isolierende Abstandstück 10 ist so bemessen, daß sich an den federnden Kontaktmatten 4, 5 der gewünschte Anpreßdruck P einstellt. Anstelle von Schrauben können selbstverständlich auch andere Mittel vorgesehen werden, die als Spannvorrichtung oder als Verbindungsmittel die gesamte Kondensatoranordnung zusammenhalten; beispielsweise können auch Klammern vorgesehen sein.

In Figur 2 ist außerdem ein Positioniergitter 12 dargestellt, das als Montagehilfe dient zur exakten Positionierung der Chipkondensatoren 6. Das Gitter 12 kann vorteilhaft mit dem Abstandshalter 10 zu einem einzigen Bauteil, das aus elektrisch isolierendem Material besteht, kombiniert werden.

Die Kondensatoranordnung 1 kann z.B. einen Teil eines in der nicht vorveröffentlichten Patentanmeldung P 40 13 821.6 beschriebenen Leistungsteiles für ein Schaltnetzteil darstellen. Die Kondensatoranordnung 1 kann die dort dargestellte Ausgangskapazität 11 mit Stromschienen 14, 15 und Ausgangsklemmen 16, 17 ersetzen. Die Kondensatoranordnung 1 könnte in einem solchen Leistungsteil ein als Steckkontakt gestaltetes Ausgangsteil bilden, wobei die Chipkondensatoren im Steckkontakt integriert sind. Eine solche Anordnung, bei der die Kondensatoranordnung als Steckkontakt 13 einer Steckverbinderanordnung vorgesehen ist, ist in Figur 3 dargestellt, wobei die auch in dieser Anordnung erforderlichen Abstandstücke zwischen den Stromschienen 2 und 3 in der Zeichnung weggelassen wurden. Der Steckkontakt 13 ist in eine Steckbuchse eingesteckt, deren erstes Kontaktstück 14 als Pluskontakt und deren zweites Kontaktstück 15 als Minuskontakt dargestellt ist. Die Kontaktstücke 14, 15 sind in der Steckbuchse voneinander elektrisch isoliert angeordnet. Die auf diese Weise realisierbare Integration der Ausgangskapazität eines Schaltnetzteils in einem Steckanschluß führt zu einer Kostensenkung und einer Platzersparnis.

Schließlich ist in Figur 4 eine bereits erwähnte Gestaltungsmöglichkeit für die Kontaktmatte 5 gezeigt, wobei in einem gestanzten Blechteil durch Pressen Wölbungen hergestellt sind, die Federkontakte 16 zur Kontaktierung mit Kontaktflächen 9 auf den Chipkondensatoren 6 bilden.

**Patentansprüche**

1. Kondensatoranordnung, insbesondere zur Verwendung als Ausgangsfilter eines Schaltnetzteils, die aus einer Parallelschaltung mehrerer Kondensatoren besteht, wobei

   - Kondensatoren eingesetzt sind, die elektrische Kontaktflächen auf zwei sich gegenüberliegenden Hauptflächen aufweisen,
   - die Kondensatoren nebeneinander zwischen zwei plattenförmigen Stromschienen angeordnet sind, wobei die Kontaktflächen parallel zu den Stromschienen angeordnet sind und
   - Mittel vorhanden sind, die die übereinander geschichtete Anordnung von erster Stromschiene, Chipkondensatoren, und zweiter Stromschiene mit einer Anpreßkraft beaufschlagen, die zur sicheren Kontaktgabe erforderlich ist,

   dadurch gekennzeichnet, daß

   - als Kondensatoren Chipkondensatoren (6) eingesetzt sind, und
   - zwischen den Kontaktflächen (9) der Chipkondensatoren (6) und den Stromschienen (2,3) jeweils eine Kontaktmatte (4,5) angeordnet ist, die einen elektrischen Kontakt zwischen den Kontaktflächen (9) der Chipkondensatoren (6) und den Stromschienen (2,3) herstellen.

2. Kondensatoranordnung nach Anspruch 1, dadurch gekennzeichnet, daß zur Begrenzung der von den Mitteln (11) zur Druckbeaufschlagung aufgebrachten Anpreßkraft (P) zwischen der ersten und zweiten Stromschiene (2,3) Abstandstücke (10) aus elektrisch isolierendem Material angeordnet sind.

3. Kondensatoranordnung nach einem der vorstehenden Ansprüche, dadurch gekennzeichnet, daß als Montagehilfe und zur Positionierung von Federkontakten (16) der Kontaktmatten (4,5) auf den Kontaktflächen (9) der Chipkondensatoren (6) ein Positioniergitter (12) vorhanden ist, in welches die Chipkondensatoren (6) eingesetzt sind.

4. Kondensatoranordnung nach einem der vorstehenden Ansprüche, dadurch gekennzeichnet, daß die Chipkondensatoren (6) in ein gitterförmiges, elektrisch isolierendes Bauteil (12,10) eingesetzt sind, das sowohl als Montage- und Positionierhilfe (12) dient, wie auch als Abstandshalter (10) zur Begrenzung des Anpreßdruckes an den Chipkondensatoren (6).

5. Kondensatoranordnung nach einem der vorstehenden Ansprüche, dadurch gekennzeichnet, daß die Kondensatoranordnung (1) als Steckkontakt (13) in eine Steckbuchse eines Steckverbinders eingesetzt ist, wobei die Steckbuchse zwei voneinander elektrisch isolierte Kontaktstücke (14,15) zur Kontaktierung der ersten und zweiten Stromschienen (2,3) aufweist.

Fig.1

Fig. 2

Fig. 3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 609 216 (ROGERS CORPORATION) <br> * Seite 2, Zeile 13 - Zeile 20 * <br> * Seite 3, Zeile 27 - Seite 4, Zeile 13 * <br> * Seite 4, Zeile 28 - Zeile 33 * <br> * Seite 5, Zeile 7 - Zeile 8 * <br> * Seite 5, Zeile 22 - Seite 6, Zeile 23 * <br> * Seite 10, Zeile 33 - Seite 11, Zeile 29 * <br> * Seite 12, Zeile 15 - Zeile 29 * <br> * Abbildungen 1,7,8 * <br> --- | 1-4 | H01G13/00 <br> H01G4/38 <br> H01G9/08 |
| A | EP-A-0 415 096 (ISUZU MOTORS LIMITED) <br> * Abbildung 1 * <br> * Zusammenfassung * <br> ----- | 1 | |
| | | | **RECHERCHIERTE SACHGEBIETE (Int. Cl.5 )** <br><br> H01G |
| | Der vorliegende Recherchenbericht wurde für alle Patentansprüche erstellt | | |

| Recherchenort | Abschlußdatum der Recherche | Prüfer |
|---|---|---|
| DEN HAAG | 22 JULI 1992 | GOOSSENS A. |